# EUROPÄISCHE PATENTANMELDUNG

(11) **EP 4 316 957 A1**
(43) Veröffentlichungstag der Anmeldung: **07.02.2024**
(21) Anmeldenummer: 23188240.8
(22) Anmeldetag: 27.07.2023
(51) Int. Cl.: B62J 1/04, B62J 1/08

(54) **SCHWENKBRÜCKENEINHEIT ZUR VERBINDUNG EINES FAHRRADSATTELS**

(30) Priorität: 05.08.2022 DE 102022119796
(71) Anmelder: Gneuß, Detlef, 6919 Carabietta (CH)
(72) Erfinder: Gneuß, Detlef, 6919 Carabietta (CH)
(74) Vertreter: Tarvenkorn, Oliver

(57) **Zusammenfassung**

Schwenkbrückeneinheit (20') zur Verbindung eines Fahrradsattels (100') mit einer Sattelstütze (30), wobei der Fahrradsattel (100') ein Sitzelement (10) mit einer Sitzfläche (11) und wenigstens zwei zueinander beabstandeten Befestigungsstäbe (12) an seiner Unterseite aufweist,
und wobei die Schwenkbrückeneinheit (20') wenigstens umfasst:
- eine sich in Längsrichtung des Sitzelements (10) erstreckende Schwenkachse (22');
- eine Mittelbasis (21'), die mit einem Sattelstützenkopf (31) verbindbar ist und die wenigstens ein Lager (29') für die Schwenkachse (22') aufweist;
- ein Sattelklemmungselement (28'), das an der Schwenkachse (22') gelagert und zur Halterung der Befestigungsstäbe (12) des Sitz elements (10) ausgebildet ist,
dadurch gekennzeichnet, dass das Sattelklemmungselement (28') an jeder Seite über wenigstens ein komprimierbares Dämpfungselement (23') gegenüber der Mittelbasis (21') abgestützt ist, wobei die Achse der Dämpfungselemente (23') jeweils in einem Winkel von 5° bis 30° in Bezug zu einer vertikalen Mittelachse angestellt sind.

## Beschreibung

Die Erfindung betrifft eine Schwenkbrückeneinheit zur Verbindung eines Fahrradsattels mit einer Sattelstütze, wobei der Fahrradsattel ein Sitzelement mit einer Sitzfläche und wenigstens zwei zueinander beabstandeten Befestigungsstäben an seiner Unterseite aufweist, und wobei die Schwenkbrückeneinheit wenigstens umfasst:
- eine sich in Längsrichtung des Sitzelements erstreckende Schwenkachse;
- eine Mittelbasis, die mit einem Sattelstützenkopf verbindbar ist und die wenigstens ein Lager für die Schwenkachse aufweist;
- ein Sattelklemmungselement, das an der Schwenkachse gelagert und zur Halterung der Befestigungsstäbe des Sitzelements ausgebildet ist.

Der Sattel eines Fahrrads ist zentraler Punkt für die Krafteinleitung auf die Pedalen. Beim Fahrer oder der Fahrerin sind im Kontaktbereich zum Sattel Knochen, Knorpel, Nerven, Muskeln usw. miteinander verbunden. Grundsätzlich sollte dieser Punkt stabil sein. Eine lose Verbindung des Sattels zum Fahrrad oder auch ein loser Sitz des Fahrers oder der Fahrerin auf dem Sattel führt zu einer Irritation der Abläufe. Sie ist auch nicht förderlich bei der Krafteinleitung in die Pedalen, welche sich zudem mit dem Winkel am Knie noch deutlich verändert. Bei einem nahezu gestreckten Bein wird die maximale Kraftübertragung in die Pedale ermöglicht, sodass dies auch bei sportlichem Fahren von Bedeutung ist. Beim Strecken des Beins rutscht der innere Oberschenkelbereich seitlich vom Sattel, sodass an dieser Stelle ein erhöhter Druck auf das Gewebe erfolgt, insbesondere im obersten Innenbereich des Oberschenkels in der Leistengegend. Der Druck führt bei gleichzeitiger ständiger Bewegung zur Reibung zwischen dem Sattel und der Haut.

Die Beseitigung der Druckbelastung ist mit einem weichen Sattel nur sehr bedingt zu erreichen, zudem ist dies beim sportlichen Fahren eher hinderlich, da die Sitzfestigkeit damit verloren geht.

Es sind Fahrradsättel bekannt, bei denen es eine Schwenkachse gibt, welche sich längs in Fahrtrichtung erstreckt und welche das seitliche Kippen des Sattels erlaubt. In der Patentschrift DE 405 358 A ist ein Sattel beschrieben, der eine solche Schwenkachse besitzt. Zugleich soll aber auch noch eine lineare Verschiebung des Sattels in Fahrtrichtung möglich sein. Um Kippen und Längsverschiebung gleichzeitig zu ermöglichen, ist eine aufwändige Führung erforderlich.

Ein weiterer seitlich kippender Sattel ist in DE 1 231 126 B gezeigt. Dort ist ein Lager für einen sogenannten Waagebalken vorgesehen, der eine Schwenkbewegung des Sattelteils zur Seite ermöglichen soll. Außerdem ist ein Gelenk vorgesehen, um den Sattel um eine horizontale Achse, die quer zur Fahrtrichtung verläuft, nach hinten kippen zu lassen. Das Satteloberteil ist über insgesamt vier Spiraldruckfedern gegenüber einer Basis abgestützt. Diese Konstruktion ist aufwändig und für schmale Sättel bei Sporträdern nicht geeignet.

In DE 40 05 566 A1 ist ebenfalls angegeben, dass bei einem Fahrradsattel seitliche Kippbewegungen ermöglicht sein sollen. Die Lösung sieht in ebenso ungewöhnlicher wie aufwändiger Weise Seilzüge vor, um die Bewegung zu steuern.

Die ältere Gebrauchsmusterschrift DE 202 12 353 U1 sieht eine Kugelkopfverbindung des Sattels mit dem Sattelrohr vor, sodass nicht nur, aber auch seitliche Kippbewegungen möglich sind.

DE 697 20 497 T2 beschreibt eine weitere Variante eines Fahrradsattels, der seitliche Schwenkbewegungen um eine Achse zulassen soll, die sich in Längsrichtung des Fahrrads erstreckt. Diese Achse befindet sich recht weit oben, nämlich unmittelbar im Bereich der Sitzfläche.

Der Fahrradsattel gemäß DE 20 2014 010 041 A1 sieht ebenfalls eine Schwenkachse in Längsrichtung vor. Die seitliche Kippbewegung wird durch Luftfederelemente gedämpft.

Bei den Fahrradsattel nach dem europäischen Patent EP zwei 003 046 B1 ist zwar keine Längsachse vorgesehen. Gleichwohl wird eine seitliche Kippbewegung dadurch ermöglicht, dass ein Sitzelement über ein punktförmiges, elastomeres Element am Sattelrohr befestigt ist. Der Kippwinkel wird durch weitere elastomere Elemente begrenzt.

In der DE 20 2017 001 074 U1 wird eine kompakte Lösung in Form einer Schwenkbrückeneinheit beschrieben, die zwischen einer herkömmlichen Sattelstütze und einem herkömmlichen Sitzelement eines Fahrradsattels einsetzbar ist, sodass auf vorhandene Teile zurückgegriffen werden kann. Die schwenkbare Einheit ist durch zwei Torsionsfedern gehalten. Die bei einer Seitenneigung wirkenden Rückstellkräfte sind nur durch die Eigenschaften der eingesetzten Torsionsfedern bestimmt und können daher nur durch Austausch der Torsionsfeder verändert werden.

Die Aufgabe der Erfindung besteht somit darin, bei einem Fahrradsattel der eingangs genannten Art eine begrenzte Seitenneigung zu ermöglichen und durch den Komfort zu erhöhen.

Diese Aufgabe wird durch einen Schwenkbrückeneinheit für einen Fahrradsattel mit den Merkmalen des Anspruchs 1 gelöst.

Der erfindungsgemäße Schwenkbrückeneinheit hat insbesondere den Vorteil, dass durch je wenigstens ein Dämpfungselement auf jeder Seite, das ggf. vorspannbar ist, eine gedämpfte Seitenneigungsbewegung erreicht werden kann.

Durch eine optionale Möglichkeit zur Vorspannung der beiden seitlichen Dämpfungselemente ist deren Empfindlichkeit einfach einstellbar.

Der Begriff "Dämpfungselement" wird im Sinne der Erfindung als ein stoßdämpfendes und die Schwenkbewegung dämpfendes Element verstanden, wobei es sich im physikalischen Sinne um ein verformbares und rückstellbares Federelement handelt, das mit einem zusätzlichen Bewegungsenergie aufzehrenden Element, also einem Dämpfungselement im physikalischen Sinn, kombiniert ist.

Für eine optimale Funktion der Schwenkbrückeneinheit ist es besonders vorteilhaft, wenn die Dämpfungselemente so gewählt und gestaltet sind, dass die Dämpfung bei Beginn der seitlichen Schwenkbewegung der Schwenkbrücke sehr weich startet und möglichst kein Losbrechmoment vorliegt.

Dämpfungselemente aus Elastomeren oder Kautschuk sind dazu gut geeignet. Bevorzugt werden deshalb elastomere, komprimierbare Dämpfungselemente eingesetzt, die kostengünstig verfügbar sind und die seitliche Schwenkbewegung in einer für den Fahrradfahrer angenehmen Weise dämpfen und begrenzen.

Als Dämpfungselement im Sinne der Erfindung sind auch Spiral-Druckfedern oder Tellerfedern einsetzbar, die eine geringe Bauhöhe besitzen.

Spiral-Druckfedern oder Tellerfedern sollten zwei- oder mehrstufig aufgebaut sein, um den oben beschriebenen Effekt einer bereits bei Beginn der Schwenkbewegung einsetzenden weichen Dämpfung, ohne Losbrechmoment, zu erzielen. Das heißt, es werden auf jeder Seite der Schwenkbrückeneinheit wenigstens zwei Spiral-Druckfedern oder Tellerfedern in Reihe geschaltet, also insbesondere als Paket übereinander angeordnet, so dass zunächst die weichere Feder wirksam ist und erst nach deren vollständiger Kompression die stärkere Feder komprimiert wird.

Torsionsstab-Federn sind dazu ebenfalls vorstellbar. Bevorzugt ist vorgesehen, dass der Drehpunkt der Schwenkachse so zwischen dem Sitzelement und der Sattelstütze positioniert ist, dass die Schwenkachse im Bereich der Sattel-Befestigungsstäbe des Sitzelements verläuft, wobei der vertikale Abstand zu den Sattel-Befestigungsstäben zwischen 1 mm und 50 mm veränderbar ist. Die Sitzoberfläche kippt insbesondere mit einem Radius von ca. 2 bis 5 cm um ca. 3 bis 10 mm seitlich weg. Danach wird sie formschlüssig durch Kontakt des Sattelklemmungselement mit der Mittelbasis oder durch maximale Kompression der Dämpfungselemente gehalten.

Besonders bevorzugt wird die Schwenkachse ohne Abstand, also genau auf Höhe der Sattel-Befestigungsstäbe, positioniert.

Der Schwenkbereich der Satteloberfläche hat sich in der Praxis als ein wesentliches Kriterium herausgestellt, denn eine zu große Schwenkbewegung der Sitzoberfläche wird als negativ empfunden. Positive Erfahrungen wurden bereits mit einer Positionierung der Schwenkachse von bis zu 10 mm zu den Sattel-Befestigungsstäben entfernt gemacht. Damit reduzieren sich die Reibungskräfte zwischen Sattel und Zwickel bereits deutlich, sodass dort befindliches Körpergewebe spürbar geschont wird. Eine Irritation bei der Kraftübertragung auf die Pedalen war nicht feststellbar.

Die Schwenkachse ist Teil einer Schwenkbrückeneinheit, über die die Sattelstütze und das Sitzelement mit seinen Befestigungsstäben miteinander lösbar verbunden sind. Das Sitzelement kann in herkömmlicher Weise mit den integrierten Befestigungsstäben des Sitzelements an der Unterseite ausgebildet sein und benötigt keine erfindungsspezifischen Anpassungen. Die Schwenkbrückeneinheit ist trotz der Integration der Schwenkachse, die die seitliche Neigung ermöglicht, kompakt aufgebaut und besitzt nur eine geringe Bauhöhe. Eine bevorzugte Ausführungsform der Erfindung sieht eine Schwenkbrückeneinheit mit einer Mittelbasis vor, die einen halbzylindrischen Vorsprung an der Unterseite besitzt, sowie eine muldenförmige Aufnahme dafür am Sattelstützenkopf. Dadurch kann die Neigung des Sitzelements in Bezug auf das Sattelrohr stufenlos verändert werden. Die eingestellte Position wird gehalten, indem wenigstens zwei Schrauben die Schwenkbrückeneinheit auf den Sattelstützenkopf ziehen.

Um die seitliche Neigung zu begrenzen und die Rückstellung des Sitzelements in die Ausgangslage zu bewirken, ist bei der erfindungsgemäßen Schwenkbrückeneinheit an jeder Seite jeweils wenigstens ein Dämpferelement vorgesehen.

Eine weitere bevorzugte Ausführungsform sieht vor, an jeder Seite ein Paar von Dämpfungselementen vorzusehen, wobei obere Dämpfungselemente jeweils zwischen dem Sattelklemmungselement und der Mittelbasis angeordnet sind und unterhalb der Mittelbasis untere Dämpfungselemente vorgesehen sind, die über Schrauben mit dem Sattelklemmungselement verbunden sind. Dadurch wird bei der Neigung zur Seite das jeweilige obere Dämpfungselement an der Seite gestaucht und das untere entlastet. An der anderen Seite wird zugleich das obere Dämpfungselement entlastet und das untere Dämpfungselement über die Schraube gestaucht.

Die Federkonstanten der oberen und unteren Dämpfungselemente müssen nicht notwendigerweise gleich sein, wie auch die Länge der Dämpfungselemente unterschiedlich sein kann. Hierdurch ist eine abgestufte Federung möglich. Beispielsweise kann das obere Dämpfungselement weich ausgebildet sein, sodass zu Beginn der Kippbewegung zur Seite nur ein geringer Widerstand zu spüren ist. Mit zunehmender Neigung wird dann über die Schraube das Dämpfungselement auf der jeweils anderen Seite der Mittelachse zunehmend gespannt. Da durch die symmetrische Anordnung die Wege des kippenden Sitzelements auf beiden Seiten gleich sind, werden die Gesamteigenschaften der Federwirkung durch die für parallel geschaltete Federn geltenden Gesetzmäßigkeiten bestimmt.

Die Erfindung wird nachfolgend mit Bezug auf das in den Zeichnungen dargestellte Ausführungsbeispiel näher erläutert. Die Figuren zeigen im Einzelnen:
- Fig. 1: einen Fahrradsattel mit einer Schwenkbrückeneinheit nach einer ersten Ausführungsform der Erfindung, in seitlicher Ansicht;
- Fig. 2: die Schwenkbrückeneinheit in perspektivischer Ansicht;
- Fig. 3: die Mittelbasis der Schwenkbrückeneinheit in perspektivischer Ansicht;
- Fig. 4: eine Ansicht auf den Fahrradsattel mit der Schwenkbrückeneinheit von hinten;
- Fig. 5: einen vergrößerter Detailausschnitt der Ansicht von hinten gemäß Figur 4;
- Fig. 6: die Ansicht von hinten gemäß Figur 4 im Schnitt;
- Fig. 7: den Fahrradsattel mit der Schwenkbrückeneinheit in einer per-spektivischen Ansicht von schräg vorne;
- Fig. 8: einen Fahrradsattel mit einer Schwenkbrückeneinheit gemäß einer zweiten Ausführungsform, in perspektivischer Explosionsansicht und
- Fig. 9: einen Schnitt quer durch den Fahrradsattel 100 gemäß Figur 8.

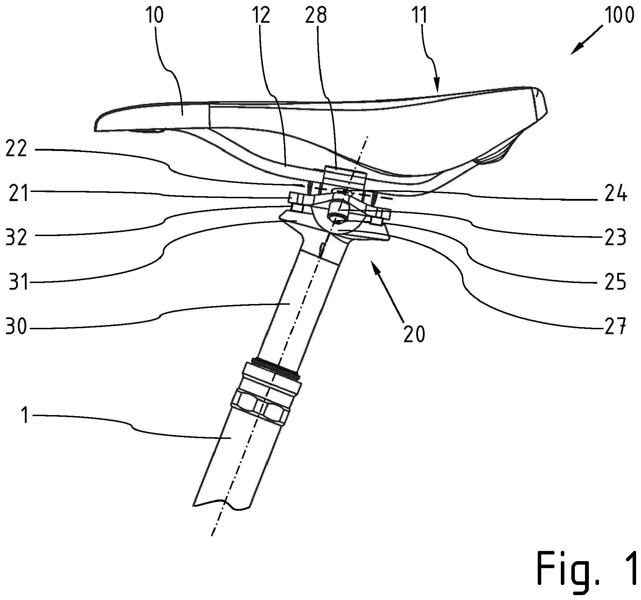

Figur 1 zeigt einen Fahrradsattel 100 in seitlicher Ansicht. Eine obere Einheit des Fahrradsattels 100 wird durch ein Sitzelement 10 gebildet, das beispielsweise in an sich bekannter Weise als Kunststoffschale mit einer darauf aufgebrachten Polsterung gebildet ist. In die Kunststoffschale des Sitzelements 10 sind zwei Befestigungsstäbe 12 integriert, die zumindest in dem Bereich, der für die Verbindung mit einer Sattelstütze 30 vorgesehen ist, parallel zueinander verlaufen. Die Oberseite des Sitzelements 10 bildet eine Sitzfläche 11.

Die Sattelstütze 30 ist in einem Sattelrohr 1 geführt, bei dem es sich entweder um ein Rahmenbauteil des Fahrrads handeln kann oder beispielsweise um ein Teleskop-Sattelrohr, das über eine integrierte hydraulische Einheit längenverstellbar ist, um die Höhe der Sitzfläche 11 gegenüber dem Fahrrad individuell und gegebenenfalls auch während der Fahrt einstellen zu können.

Die Sattelstütze 30 ist als zylindrisches Rohr ausgebildet, und läuft an ihrer Oberseite in einem Sattelstützenkopf 31 aus. Im dargestellten Ausführungsbeispiel besitzt der Sattelstützenkopf 31 an seiner Oberseite 31 eine muldenförmige Vertiefung, in die ein halbzylindrischer Vorsprung 27 einer Schwenkbrückeneinheit 20 gelagert ist. Über je eine Schraube, die sich von einem vorderen Punkt an dem Sattelstützenkopf 31 bzw. von einem rückwärtigen Punkt aus in eine Gewindebohrung in einer Mittelbasis 21 einer Schwenkbrückeneinheit 20 erstreckt, kann die Neigung der Mittelbasis 21 gegenüber der Sattelstütze 30 verändert und dauerhaft gehalten werden.

Die Schwenkbrückeneinheit 20 besitzt an ihrer Oberseite ein zweiteiliges Sattelklemmungselement 28, in welchem die Befestigungsstäbe 12 des Sitzelements 10 geführt und geklemmt sind. Das Sattelklemmungselement 28 ist über eine sich in Längsrichtung des Fahrradsattels 100 erstreckende Schwenkachse 22 gelenkig an der Mittelbasis 21 gelagert.

Das Sattelklemmungselement 28 und die Mittelbasis 21 sind an beiden Seiten des Fahrradsattels 100 jeweils durch Dämpfungselemente 23, 24 abgestützt, welche über Vorspannschrauben 25 gehalten und ggf. einstellbar sind.

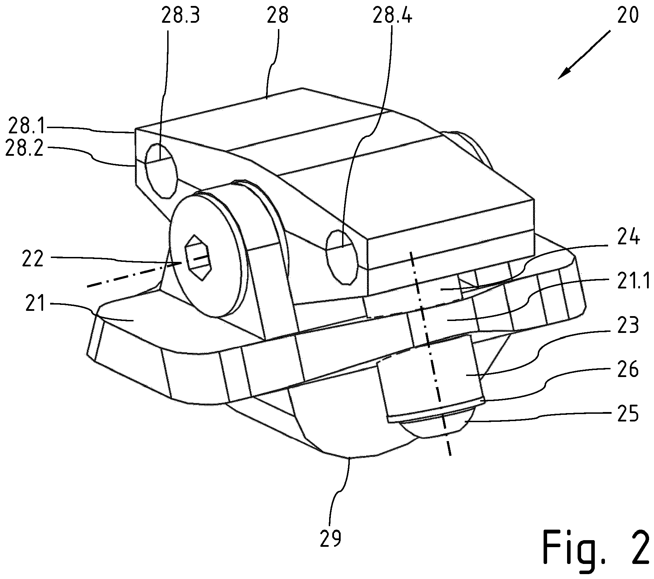

Die Schwenkbrückeneinheit 20 ist in Figur 2 ohne die übrigen Teile des Fahrradsattels in einer perspektivischen Abbildung gezeigt. Das Sattelklemmungselement 28 besteht aus zwei miteinander verbundenen Halbelementen 28.1, 28.2. Nuten in den beiden Halbelementen 28.1, 28.2, welche sich zur gemeinsamen Kontaktebene hin öffnen, ergänzen sich im montierten Zustand des Sattelklemmungselements 28 zu zwei parallel ausgerichteten, durchgehenden Bohrungen 28.3, 28.4, in denen die Befestigungsstäbe 12 des Sitzelements 10 aufgenommen und geklemmt sind. Durch Lockern der Verbindung zwischen den Halbelementen 28.1, 28.2 wird die Klemmung der Befestigungsstäbe 12 aufgehoben, sodass die Längsposition des Sitzelements 10 zum Sattelrohr 30, und damit zum Fahrradrahmen, veränderbar ist.

Die erfindungsgemäße Ausgestaltung der Schwenkbrückeneinheit 20 sieht insbesondere eine Schwenkachse 22 vor, über welche das Sattelklemmungselement 28 gelenkig mit der Mittelbasis 21 verbunden ist. Um den Schwenkbereich zu begrenzen und damit die seitliche Neigung des Sitzelements in Bezug auf die Sattelstütze zu begrenzen, ist das Sattelklemmungselement 28 an beiden Seiten der Schwenkachse 22 über jeweils wenigstens ein Dämpfungselement 24 direkt an der Mittelbasis 21 abgestützt.

Die Erfindung sieht in der gezeigten Ausführungsform der Schwenkbrückeneinheit 20 zu beiden Seiten jeweils noch ein weiteres Dämpfungselement 23 vor, das sich von der Mittelbasis 21 aus nach unten erstreckt. Es ist co-linear mit dem oberen Dämpfungselement 24 ausgerichtet. Beide Dämpfungselemente 23, 24 besitzen jeweils eine zentrale Bohrung, durch welche eine Schraube 25 geführt ist, welche von unten in das untere Halbelement 28.2 des Sattelklemmungselements 28 eingreift. Zwischen dem Kopf der Schraube 25 und dem unteren Dämpfungselement 24 ist eine Ringscheibe 26 vorgesehen.

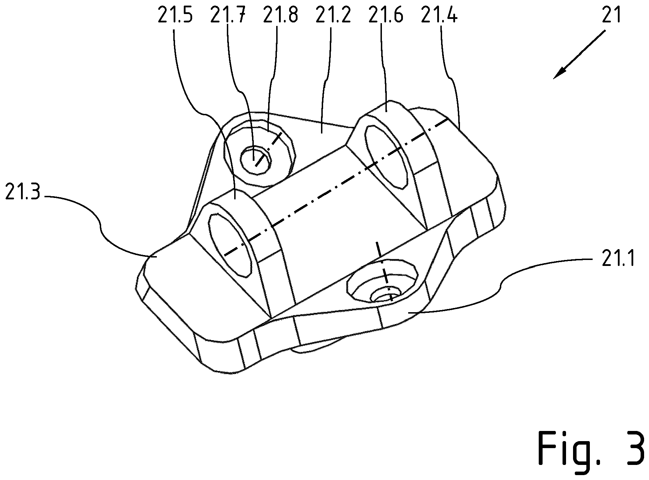

Figur 3 zeigt die Mittelbasis 21 der Schwenkbrückeneinheit 20 als Einzelteil in perspektivischer Ansicht. In Längsrichtung des Sattels sind vorn und hinten Vorsprünge 21.3, 21.4 vorgesehen, an deren Unterseite Gewindebohrungen vorgesehen sind, in welche die am Sattelstützenkopf abgestützten Schrauben eingreifen. Lageraugen 21.5, 21.6 nehmen die Schwenkachse auf. Seitlich sind die nach oben geneigten Flügel 21.1, 21.2 ausgebildet, die Bohrungen 21.7 besitzen, um die herum an der Ober- und Unterseite der Flügel 21.1, 21.2 jeweils Senkungen 21.8 vorgesehen sind, um die Ende der Dämpfungselemente formschlüssig zu halten und zu führen.

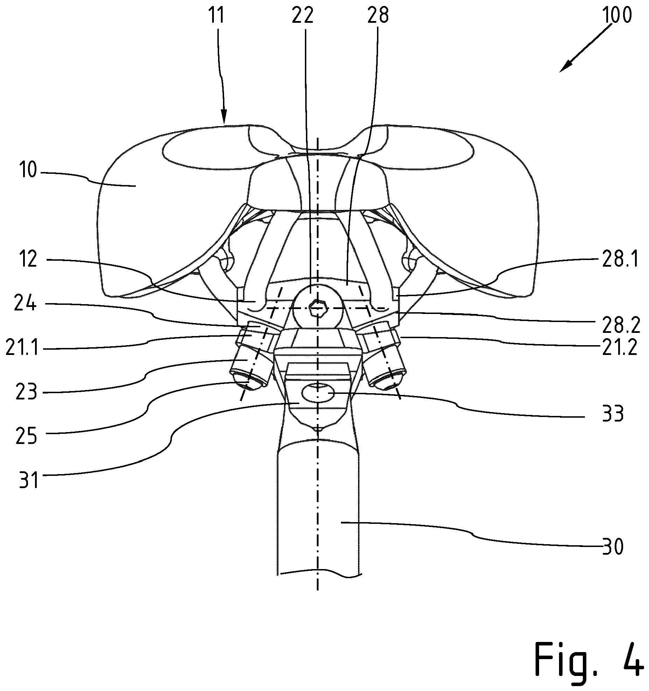

Figur 4 ist eine Ansicht auf den Fahrradsattel von hinten, wobei insbesondere die Neigung der seitlich angeordneten Dämpfungselement 23, 24 in Bezug auf die vertikale Mittelachse des Fahrradsattels 100 deutlich wird. Damit die Dämpfungselemente 23, 24 in Richtung ihrer jeweiligen Mittelachse gestaucht werden, und nicht schräg dazu, ist die Unterseite des Halbelements 28.2 des Sattelklemmungselements 28 an der Unterseite mit angeschrägten Flächen versehen. Da zugleich an der Mittelbasis 21 die jeweils nach oben geneigten Flügel 21.1, 21.2 ausgebildet sind, stehen die Pakete von Dämpfungselementen 23, 24 schräg in Bezug auf die Mittelachse des Sattelrohrs 30, und zwar mit einem Winkel von bis zu 30°.

Auch ist in Figur 4 die Lage der Schwenkachse 22 zu sehen, welche sich mit ihrem Drehpunkt nur wenige Millimeter unterhalb der Kontaktebene zwischen den Halbelementen 28.1, 28.2 befindet.

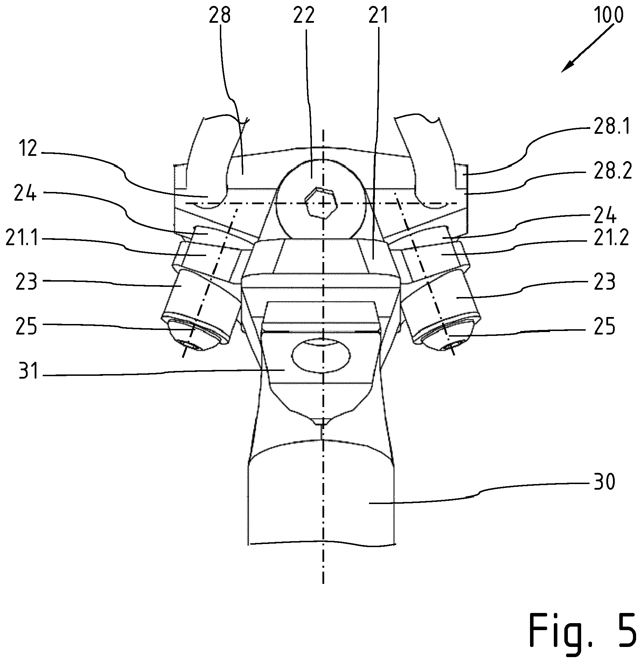

Figur 5 ist ein vergrößerter Detailausschnitt der Ansicht auf den Fahrradsattel von hinten gemäß Figur 4, anhand dessen Lage und Funktion der Dämpfungselement 23, 24 erläutert wird. Das obere Dämpfungselement 24 ist mit seinem oberen Rand in einer zylindrischen Senkung in dem Halbelement 28.2 geführt. Mit seinem unteren Rand ist es in der Senkung an der Oberseite des Flügels 21.1 der Mittelbasis 21 aufgenommen, sodass das Dämpfungselement 24 gegen seitliches Verrutschen oder Verkippen gesichert ist. Eine Schraube 25 stützt sich über eine Ringscheibe 26 an der Unterseite des Dämpfungselements 23 ab und erstreckt sich durch das untere Dämpfungselement 23, den Flügel 21.1, das obere Dämpfungselement 24 und das untere Halbelement 28.2 hindurch bis in das obere Halbelement 28.1 des Sattelklemmungselements 28, in welchem eine Gewindebohrung ausgebildet ist, in die die Schraube 25 eingreift. Damit dienen die beiden rechts und links an der Schwenkbrückeneinheit 20 vorgesehenen Schrauben 25 auch der Verbindung der Halbelemente 28.1, 28.2 untereinander.

Neigt sich das Sattelklemmungselement 28 beispielsweise um die Schwenkachse 22 nach links, so führt dies zur Stauchung des linken oberen Dämpfungselements 24 zwischen dem unteren Halbelement 28.2 und dem Flügel 21.1 der Mittelbasis 21. Zugleich wird die Schraube 25 relativ zum Flügel 21.1 nach unten herausgeschoben, sodass das untere Dämpfungselement 23 entlastet wird. An der rechten Seite hingegen wird das obere Dämpfungselement 24 bei derselben Kippbewegung des Sitzelements 10 nach links entlastet, während das untere Dämpfungselement 23 auf der rechten Seite komprimiert wird.

Im Ergebnis wird die Federwirkung bei der Neigung nach links durch eine Überlagerung der Eigenschaften des linken oberen Dämpfungselements 23 und des rechten unteren Dämpfungselements 24 bestimmt. Die vier Dämpfungselemente 23, 24 werden kreuzweise zu beiden Seiten der Mittelachse des Fahrradsattels 100 abwechselnd gestaucht oder entlastet.

Über die Schrauben 25 kann eine Vorspannung auf das Paket von Dämpfungselementen 23, 24 aufgebracht werden. Möglich ist aber auch, dass die Befestigungsschrauben 25 nur so weit eingedreht werden, dass ein Spiel der Dämpfungselement 23, 24 gegenüber der Mittelbasis 21 bzw. dem Sattelklemmungselement 28 vermieden wird, die Dämpfungselemente 23, 24 aber nicht vorgespannt werden.

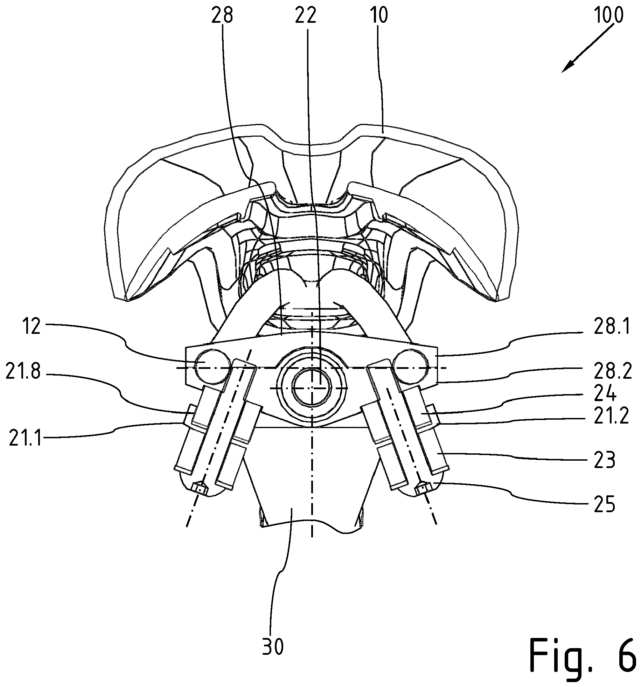

Figur 6 ist ein Schnitt quer durch den Fahrradsattel 100 in der Ebene der Mittelachsen der Dämpfungselement 23, 24. Dort ist insbesondere die Aufnahme der Dämpfungselemente 24 in den Senkungen 21.8 an den Flügeln 21.1, 21.2 und an der Unterseite des Halbelements 28.2 sichtbar.

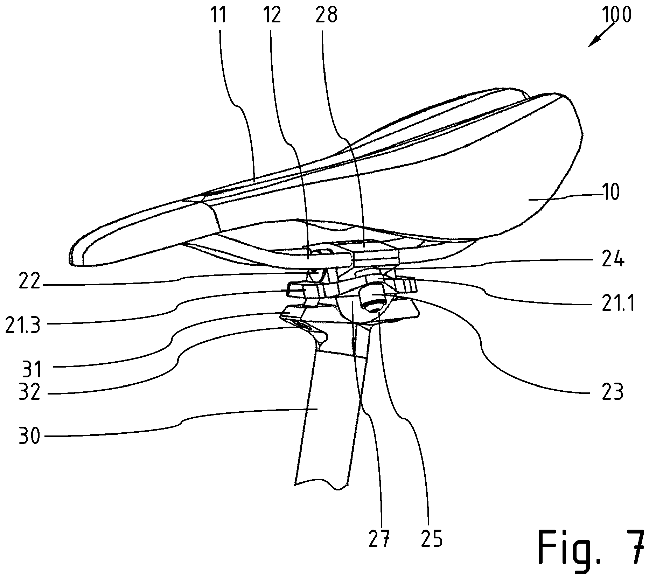

Figur 7 zeigt den Fahrradsattel 100 in einer perspektivischen Ansicht von vorne links. Hierbei wird die Lage der Schwenkachse 22 zwischen den Befestigungsstäben 12 des Sitzelements 10 deutlich, wie auch die Lagerung der Schwenkbrückeneinheit 20 über den halbzylindrischen Vorsprung 27, der in einer sich quer zur Fahrtrichtung erstreckenden Mulde im Sattelstützenkopf 31 abgestützt ist und über die Befestigungsschrauben 32 dort hineingezogen und fixiert wird. Die Schrauben 25 ragen mit den unteren Dämpfungselementen 23 schräg nach unten, sodass sie zwar gut zugänglich sind, um beispielsweise die Federvorspannung einzustellen, andererseits aber seitlich nicht über die Sitzfläche 11 des Sitzelements 10 überstehen, sodass ein Kontakt mit den Innenseiten der Oberschenkel vermieden wird.

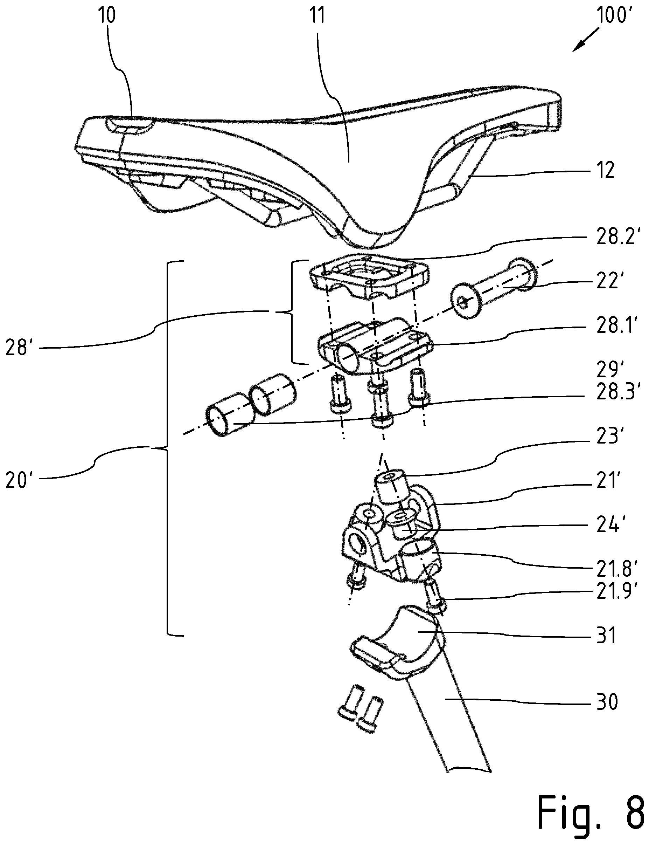

Figur 8 zeigt einen weiteren Fahrradsattel 100' mit einer leicht veränderten Schwenkbrückeneinheit 20'.

Die Schwenkbrückeneinheit 20' besitzt ebenfalls ein zweiteiliges Sattelklemmungselement 28', das über eine sich in Längsrichtung des Fahrradsattels 100' erstreckende Schwenkachse 22' gelenkig an einer Mittelbasis 21' gelagert ist. Es besteht aus zwei miteinander verbundenen Halbelementen 28.1', 28.2`, zwischen denen die Befestigungsstäbe 12 des Sitzelements 10 aufgenommen und geklemmt sind.

Anstelle von den bei der ersten Ausführungsform vorgesehenen seitlichen Flügeln besitzt die Mittelbasis 21' hier beidseits je eine topfförmige, zylindrische Aufnahme 21.8`, in die zunächst eine Druckbuchse 24' eingesetzt wird und darauf ein zylindrisches elastomeres Dämpfungselement 23' gesetzt wird. Die Druckbuchse 24' und das Dämpfungselement 23' sind innerhalb der Aufnahme 21.8` beweglich. Die Zylinderform der Aufnahme 21.8` begrenzt die radiale Ausdehnung des darin geführten und unter Last gestauchten Dämpfungselements 23'.

Die Druckbuchse 24' und das Dämpfungselement 23' besitzen je eine zentrale Bohrung, durch die eine Schraube geführt ist. Die Schraube dient dazu, das zwischen der Druckbuchse 24' und dem Sattelklemmungselement 28' eingesetzte Dämpfungselement 23' vorzuspannen und damit die Härte einzustellen.

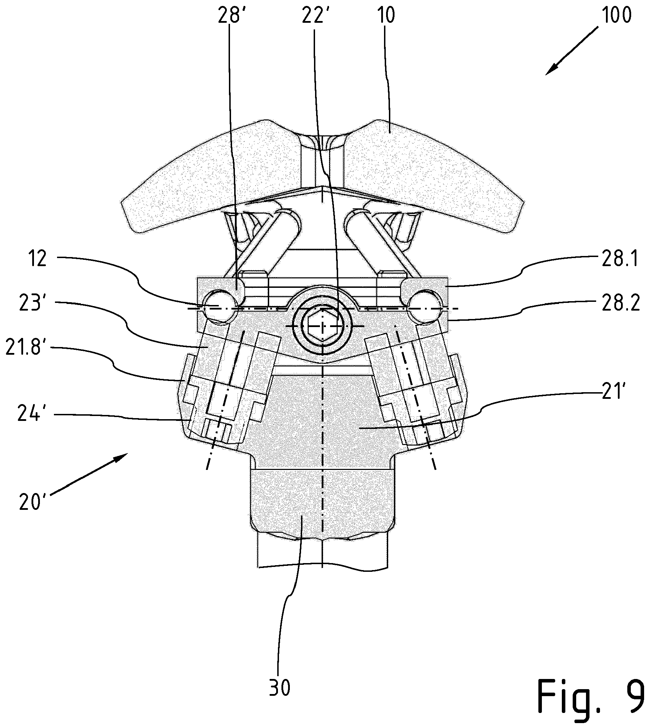

Figur 9 ist nochmals ein Schnitt quer durch den Fahrradsattel 100' in der Ebene der Mittelachsen der Dämpfungselemente 23', so dass die Aufnahme der Dämpfungselemente 23' in den Aufnahmen 21.8` an der Mittelbasis 21' und die jeweils unter den Dämpfungselementen 23' eingesetzten Druckbuchsen 24' sichtbar sind.

### Bezuqszeichen:

- 100; 100`: Fahrradsattel
- **10**: **Sitzelement**
- 11: Sitzfläche
- 12: Befestigungsstäbe
- **20**: **Schwenkbrückeneinheit**
- 21: Mittelbasis
- 21.1,21.2: Flügel
- 21.3,21.4: Vorsprünge
- 21.5,21.6: Lageraugen
- 21.7: Bohrung
- 21.8: Senkung
- 22: Schwenkachse
- 23, 24: Dämpfungselemente
- 25: Schraube
- 26: Ringscheibe
- 27: Vorsprung
- 28: Sattelklemmungselement
- 28.1,28.2: Halbelemente
- 28.3,28.4: Bohrungen

- **20'**: **Schwenkbrückeneinheit**
- 21': Mittelbasis
- 21.8': Aufnahme
- 22': Schwenkachse
- 23': Dämpfungselemente
- 24': Druckbuchse
- 25': Schraube
- 28': Sattelklemmungselement
- 28.1', 28.2': Halbelemente
- 28.3': Schwenklagerbuchsen
- **30**: **Sattelstütze**
- 31: Sattelstützenkopf
- 32: Schrauben

## Patentansprüche

1. Schwenkbrückeneinheit (20; 20') zur Verbindung eines Fahrradsattels (100; 100') mit einer Sattelstütze (30), wobei der Fahrradsattel (100; 100') ein Sitzelement (10) mit einer Sitzfläche (11) und wenigstens zwei zueinander beabstandeten Befestigungsstäbe (12) an seiner Unterseite aufweist,
und wobei die Schwenkbrückeneinheit (20; 20') wenigstens umfasst:
- eine sich in Längsrichtung des Sitzelements (10) erstreckende Schwenkachse (22; 22');
- eine Mittelbasis (21; 21'), die mit einem Sattelstützenkopf (31) verbindbar ist und die wenigstens ein Lager (29') für die Schwenkachse (22; 22') aufweist;
- ein Sattelklemmungselement (28; 28'), das an der Schwenkachse (22; 22') gelagert und zur Halterung der Befestigungsstäbe (12) des Sitz elements (10) ausgebildet ist,
**dadurch gekennzeichnet, dass** das Sattelklemmungselement (28; 28') an jeder Seite über wenigstens ein komprimierbares Dämpfungselement (23, 24; 23') gegenüber der Mittelbasis (21; 21') abgestützt ist, wobei die Achse der Dämpfungselemente (23, 24; 23') jeweils in einem Winkel von 5° bis 30° in Bezug zu einer vertikalen Mittelachse angestellt sind.

2. Schwenkbrückeneinheit (20; 20') nach Anspruch 1, **dadurch gekennzeichnet, dass** der Drehpunkt der Schwenkachse (22; 22') so zwischen dem Sitzelement (10) und der Sattelstütze (30) positioniert ist, dass die Schwenkachse (22; 22') auf Höhe der Befestigungsstäbe (12) oder max. 50 mm unterhalb der Befestigungsstäbe (12) des Sitzelements (10) verläuft.

3. Schwenkbrückeneinheit (20; 20') nach Anspruch 1, **dadurch gekennzeichnet, dass** der Drehpunkt der Schwenkachse (22; 22') oberhalb der Befestigungsstäbe (12) angeordnet ist.

4. Schwenkbrückeneinheit (20; 20') nach einem der vorhergehenden Ansprüche, **dadurch gekennzeichnet, dass** die Schwenkachse (22; 22') Teil des Sattelklemmungselements (28; 28') ist, über die die Sattelstütze (30) und das Sitzelement (10) mit den Befestigungsstäben miteinander lösbar verbunden sind.

5. Schwenkbrückeneinheit (20) nach einem der vorhergehenden Ansprüche, **gekennzeichnet durch** eine Mittelbasis (21; 21'), die seitlich je einen schräg nach oben angestellten Flügel (21.1) aufweist, an dem das wenigstens eine Dämpfungselement (23, 24) abgestützt ist.

6. Schwenkbrückeneinheit (20) nach einem der vorhergehenden Ansprüche, **dadurch gekennzeichnet, dass** an jeder Seite der Schwenkachse (22) ein Paar von Dämpfungselementen (23, 24) vorgesehen ist, wobei obere Dämpfungselemente (24) jeweils zwischen dem Sattelklemmungselement (28) und der Mittelbasis (21) angeordnet sind und unterhalb der Mittelbasis (21) untere Dämpfungselemente (23) angeordnet sind, die über Schrauben (25) mit dem Sattelklemmungselement (28) verbunden sind.

7. Schwenkbrückeneinheit (20; 20') nach einem der vorhergehenden Ansprüche, **dadurch gekennzeichnet, dass** wenigstens ein Paar von Dämpfungselementen (23, 24; 23') als elastomere Dämpfungselemente aus elastomeren Kunststoffen oder aus Kautschuk ausgebildet sind.

8. Schwenkbrückeneinheit (20') nach Anspruch 7, **dadurch gekennzeichnet, dass** die elastomeren Dämpfungselemente (23') in topfförmigen Aufnahmen (21.8') an der Mittelbasis (21') aufgenommen und zwischen einer in die Aufnahme (21.8') eingesetzten Druckbuchse (24') und dem Sattelklemmungselement (28') eingespannt sind.

9. Schwenkbrückeneinheit (20; 20') nach einem der vorhergehenden Ansprüche, **dadurch gekennzeichnet, dass** wenigstens ein Paar von Dämpfungselementen (23, 24; 23') als Spiraldruckfedern oder Tellerfedern ausgebildet sind.

10. Schwenkbrückeneinheit (20; 20') nach Anspruch 9, **dadurch gekennzeichnet, dass** wenigstens ein Paar von Dämpfungselementen als zwei- oder mehrstufige Kombination von Spiraldruckfedern und/oder Tellerfedern aufgebaut ist.

11. Fahrradsattel (100; 100'), wenigstens umfassend:
- ein Sitzelement (10) mit einer Sitzfläche (11), das an seiner Unterseite wenigstens zwei beabstandete Befestigungsstäbe (12) aufweist;
- ein Sattelstütze (30), die am oberen Ende einen Sattelstützenkopf (31) aufweist und
- einer Schwenkbrückeneinheit (20; 20'), nach wenigstens einem der Ansprüche 1 bis 11.

12. Fahrradsattel (100; 100'), nach Anspruch 11, **dadurch gekennzeichnet, dass** die Schwenkbrückeneinheit (20; 20') eine Mittelbasis (21; 21') aufweist, die einen halbzylindrischen Vorsprung (27) an der Unterseite besitzt, und dass der Sattelstützenkopf (31) eine muldenförmige Aufnahme dafür besitzt.
